# EUROPEAN PATENT APPLICATION

(11) **EP 2 792 921 A1**
(43) Date of publication of application: **22.10.2014**
(21) Application number: 13163965.0
(22) Date of filing: 16.04.2013
(51) Int. Cl.: F16L 3/24, B64C 1/40, H02G 3/00

(54) **Bracket assembly**

(71) Applicant: Airbus Operations GmbH, 21129 Hamburg (DE)
(72) Inventor: Robrecht, Volker, 22767 Hamburg (DE); Raguse, Till, 20253 Hamburg (DE); Assmann, Jan, 22763 Hamburg (DE); Ruppert, Bernd, 21641 Apensen (DE); Redecker, Robert, 22761 Hamburg (DE)
(74) Representative: Isarpatent

(57) **Abstract**

The invention relates to a bracket assembly (1) comprising a bracket member (2) having a body portion (3) with attachment means (4) for attaching the bracket member (2) to a structure (S), and a holding portion (5) for holding an object with respect to the structure (S). The bracket assembly (1) also includes a fastening member (13) configured to interact with the attachment means (4) for securing the bracket member (2) to the structure (S). In this regard, the fastening member (13) and the attachment means (4) of the bracket member (2) cooperate to form a detent mechanism or a ratchet mechanism. More particularly, the bracket member (2) may include a first engagement profile (12) which is configured to cooperate with a complementary second engagement profile (14) of the fastening member (13) to form the detent mechanism or ratchet mechanism.

## Description

This invention relates to a bracket assembly for mounting or hanging objects, like pipes, conduits or cables, with respect to a vehicle structure, especially in nautical, aeronautical or automotive applications. The invention also relates to a vehicle, especially an aircraft or spacecraft, incorporating such a bracket assembly.

The installation of systems, such as electrical systems, with conduits and cables, in nautical, aeronautical or automotive applications typically involves the use of mounting brackets, which are fastened to a structure (e.g. a vehicle chassis or hull structure) to then support those systems. One type of mounting bracket often employed as a "stand-off" is designed to be screwed or riveted to the structure. This system has the disadvantage of a complex fastening procedure, which is time-consuming, as well as the weight of the fasteners used. Another known type of mounting bracket used is designed to be form-fitted to the particular structure and employs a "snap-and-click" system, which is quick to install and avoids the need for fasteners. These brackets have the disadvantage that they can be expensive, however, and a form-fitted solution is also limited to similar installation circumstances, such that different structures typically require different designs.

It is therefore an object of the present invention to provide a new and improved bracket assembly design for overcoming one or more of the problems discussed above. More particularly, it would be desirable to provide a bracket assembly which is quick and easy to install, which is generally applicable to a whole range of different structures, and which also provides a relatively inexpensive and low-weight solution.

In accordance with the present invention, a bracket assembly, a bracket member, and a corresponding method, as recited in claim 1, claim 8 and claim 12, respectively, are provided for mounting or hanging objects, like pipes, conduits or cables, with respect to a structure, particularly in nautical, aeronautical or automotive applications. Further, in accordance with the present invention, a vehicle such as an aircraft or spacecraft as recited in claim 15 is also provided. Preferred features are recited in the dependent claims.

According to one aspect, therefore, the invention provides a bracket assembly comprising:
a bracket member having: a body portion with attachment means for attaching the bracket member to a structure, and a holding portion for mounting or supporting an object with respect to the structure; and
a fastening member configured to interact with the said attachment means for securing the bracket member to the structure,
wherein the fastening member and the attachment means of the body portion cooperate to form a detent mechanism or ratchet mechanism.

For the purpose of the present application, the terms "detent mechanism" and "ratchet mechanism" are intended to describe a device or mechanism by means of which two members, or parts thereof, are configured to interact such that the two members permit movement relative to one another in a translational or rotational degree-of-freedom in one direction, but not in the reverse or opposite direction. That is, in the reverse or opposite direction the "detent-" or "ratchet mechanism" locks or engages to prevent relative movement of those members, or the parts thereof.

By virtue of the fact that the fastening member and the attachment means of the bracket member interact and cooperate to form a detent mechanism or ratchet mechanism, the bracket member can be installed quickly and easily. For example, in a preferred embodiment of the invention, the attachment means of the bracket member may include a first engagement profile configured to cooperate and interact with a complementary second engagement profile of the fastening member thereby to form the detent or ratchet mechanism. The term "engagement profile" as used herein refers to an engagement element or part and, more particularly, to the shape or form of such an engagement element or part which is configured to cooperate or interact with a complementary engagement element or part to form the detent or ratchet mechanism.

In a preferred embodiment, the first engagement profile may be provided in a bore or cavity formed in the body portion of the bracket member and the fastening member may be configured for linear (e.g. non-rotational) insertion into that bore or cavity. Accordingly, upon insertion of the fastening member, the complementary second engagement profile of the fastening member interacts with the first engagement profile and/or with a shape of the bore or cavity itself to permit only linear motion of the fastening member and in only one direction into that bore or cavity of the bracket member.

In this way, the detent or ratchet mechanism provided by the bracket assembly of the invention can be designed to allow the fastening member to be inserted into the bracket member simply and easily without using any tools. A one-way linear insertion of the fastening member, so that the complementary second engagement profile thereof engages and holds the first engagement profile in the body portion of the bracket member in the manner of a detent mechanism or a ratchet mechanism without the use of any tools is thus able to provide a very quick and very easy installation technique.

In a particularly preferred embodiment, the fastening member has an elongate body, such as a stem or shaft, for insertion into a bore or cavity of the bracket member. This elongate body (e.g. stem or shaft) of the fastening member may, for example, be substantially flexible and may optionally be configured as a strap or strip. The complementary second engagement profile of the fastening member is also desirably provided on that elongate body. Typically, the fastening member also includes a head element provided at an end region of the elongate body, with the head element configured to abut the structure to which the bracket member is mounted to thereby hold the bracket member secured to the structure. In this regard, the structure is usually provided with a hole or opening for mounting and securing the bracket assembly to it. In a preferred embodiment, the body portion of the bracket member comprises a seating surface configured to seat against or to bear against the structure when the bracket member is secured to the structure with the fastening member. In use, therefore, the bracket member is positioned at one side of the structure adjacent the hole or opening in the structure for mounting and securing the bracket assembly thereto. A distal or free end of the elongate body (e.g. shaft or stem) of the fastening member is then inserted from the other side of the structure through that hole or opening and into the bracket member, whereupon the detent mechanism or ratchet mechanism formed by the fastening member and attachment means of the bracket member acts to mount and secure the bracket assembly to the structure.

In a particularly preferred embodiment, the fastening member can be embodied in the form of a tension strap, similar to a cable tie, with a complementary second engagement profile, like a saw-tooth profile or a stepped profile, provided along the length thereof and with a head element at a proximal end thereof. Such a tension strap or cable tie can thus have a standardized or uniform shape and size and can be employed as the fastening member in a range of different bracket assembly applications.

In a particularly preferred embodiment, the bracket member includes an insertion aperture for introducing the fastening member, particularly an elongate flexible body thereof, into the bracket member and an exit aperture through which an end of the fastening member may protrude after insertion into the bracket member. Thus, where the fastening member has the second engagement profile on an elongate stem or shaft (e.g. in the form of a tension strap or cable tie) for insertion into a bore or cavity of the bracket member, the distal end region of the fastening member may protrude from the exit aperture after insertion of the elongate stem or shaft into the bracket member. In this way, the distal end region of the fastening member which represents superfluous or unnecessary length may then be removed (e.g. cut off) below the exit opening to finish or complete the installation procedure.

In a particularly preferred embodiment, the bore or cavity of the bracket member extends substantially straight or linearly through the body portion of the bracket member; for example, as a central or axial bore. As such, the insertion aperture and the exit aperture may be aligned with one another at the opposite ends of the straight bore or cavity. In a modified configuration, the bore or cavity may follow a bend or curve so that the exit aperture is at a lateral or side part of the bracket member body.

In an alternative embodiment, the attachment means comprises a projection on the body portion having the first engagement profile on an outer surface thereof, and the fastening member includes a bore or cavity which has the complementary second engagement profile therein. In this embodiment, therefore, the fastening member is configured to be placed or inserted over the projection on the body portion such that the first and second engagement profiles may interact and cooperate to form the detent mechanism or ratchet mechanism. That is, to install the bracket assembly in this case, the projection on the body portion of the bracket member may be introduced or inserted from one side of the structure through the mounting hole or opening in the structure. In this position, a seating surface of the body portion of the bracket member may seat or bear against the structure. The fastening member, which may be formed as a sleeve or axially movable "nut", may then be placed over the projection, with the projection received in the bore or cavity of the fastening member. As in the above embodiments, the first and second engagement profiles may be adapted to engage and cooperate for linear motion only with respect to one another, and preferably only in one direction. This way, the detent or ratchet mechanism can act to secure and tension the bracket assembly against the structure. According to another aspect, the present invention provides a bracket member comprising:
a body portion including attachment means for attaching the bracket member to a structure; and
a holding portion for supporting an object with respect to the structure;
wherein the attachment means includes a first engagement profile which is configured to engage and cooperate with a complementary engagement profile of a fastening member to form a detent mechanism or ratchet mechanism for securing the bracket member to the structure.

In a preferred embodiment, the first engagement profile is provided in a bore or cavity in the body portion. The bore or cavity with the first engagement profile may be configured to receive the fastening member via a linear or one-directional insertion. Desirably, the linear or one-directional insertion is a non-rotational linear motion. As noted above the bracket member may thus include an insertion aperture for introducing the fastening member into the bore or cavity and an exit aperture through which the fastening member protrudes after insertion into the bore or cavity.

In a preferred embodiment, the holding portion of the bracket member is provided at an end region of the body portion and may be configured as a hanger, e.g. for supporting elongate objects, such as conduits or cables or the like. Particularly preferably, the holding portion is configured as a resilient clip-type hanger for supporting the said object with respect to the structure.

In a particularly preferred embodiment, the holding portion of the bracket member for mounting or supporting an object with respect to the structure is detachably securable to the body portion. That is, the holding portion may be detached or separated from the body portion of the bracket. To this end, releasable securing means, e.g. in the form of a connector, may be provided on the holding portion and/or on the body portion. In this way, the body portion of the bracket member can be mounted to the structure separately in a first step and, once the body portion is fixed in position, the holding portion may be secured for mounting or supporting the object. A variety of different sized holding portions may thus be made available to accommodate different sized objects, i.e. depending upon the particular application, without any need to change the body portion of the bracket. Equally, a variety of different sized body portions can be provided for different mounting applications without needing to change the holding portion of the bracket member.

According to another aspect, therefore, the present invention provides a bracket member comprising:
a body portion having attachment means for attaching the bracket member to a structure; and
a holding portion for supporting an object with respect to the structure;
wherein the attachment means cooperates with a fastening member for securing the bracket member to the structure, especially via a detent mechanism or ratchet mechanism; and
wherein the holding portion is detachably securable to the body portion.

According to a further aspect, the present invention provides a bracket assembly comprising:
a bracket member having a body portion with attachment means for attaching the bracket member to a structure, and a holding portion for mounting or supporting an object with respect to the structure; and
a fastening member configured to interact with the said attachment means for securing the bracket member to the structure, especially via a detent or ratchet mechanism;
wherein the holding portion is detachably securable to the body portion.

According to a further aspect, the present invention provides a method of forming a bracket assembly, comprising the steps:
providing a bracket member having attachment means for attaching the bracket member to a structure, wherein the attachment means includes a first engagement profile which is configured to interact with a complementary second engagement profile of a fastening member;
positioning the bracket member adjacent a mounting hole or opening in the structure;
inserting a fastening member having said complementary second engagement profile in a linear motion through the said mounting hole or opening in the structure and into engagement with the first engagement profile;
whereby the first and second engagement profiles operate and as a detent mechanism or ratchet mechanism to secure the bracket member to the structure in a bracket assembly.

In a particularly preferred embodiment, the bracket member has a bore or cavity in which the first engagement profile is provided, and the fastening member has an elongate body, such as a shaft or stem, upon which the second engagement profile is provided. In this embodiment, therefore, the elongate body (e.g. shaft or stem) is for insertion into the bore or cavity of the bracket member. Further, a head element is provided at an end region of the fastening member to abut or bear upon the structure and to hold the bracket member secured thereto. Preferably, the elongate body (e.g. the shaft or stem) of the fastening member is substantially flexible.

According to still another aspect, the present invention may provide a vehicle, such as an aircraft, incorporating one or more bracket assembly according to any one of the embodiments of the invention described above.

For a more complete understanding of the present invention and the advantages thereof, exemplary embodiments of the invention are explained in more detail in the following description with reference to the accompanying drawings, in which like reference characters designate like parts and in which:
- Fig. 1: is a sectional side view of a bracket assembly according to an embodiment of the invention;
- Fig. 2: is a sectional side view of a bracket member for the bracket assembly shown in Fig. 1;
- Fig. 3: is a sectional side view of a bracket member for a bracket assembly according to another embodiment of the invention;
- Fig. 4: is a sectional side view of a bracket assembly in an alternative embodiment of the invention;
- Fig. 5: is a sectional side view of a bracket assembly in a further embodiment of the invention;
- Fig. 6: is a flow diagram which schematically illustrates a method according to an embodiment of the invention;
- Fig. 7: is a schematic illustration of an aircraft in which a bracket assembly according to an embodiment of the invention is used.

The accompanying drawings are included to provide a further understanding of the present invention and are incorporated in and constitute a part of this specification. The drawings illustrate particular embodiments of the invention and together with the description serve to explain the principles of the invention. Other embodiments of the invention and many of the attendant advantages of the invention will be readily appreciated as they become better understood with reference to the following detailed description.

It will be appreciated that common and well understood elements that may be useful or necessary in a commercially feasible embodiment are not necessarily depicted in order to facilitate a more abstracted view of the embodiments. The elements of the drawings are not necessarily illustrated to scale relative to each other. It will further be appreciated that certain actions and/or steps in an embodiment of a method may be described or depicted in a particular order of occurrences while those skilled in the art will understand that such specificity with respect to sequence is not necessarily required. It will also be understood that the terms and expressions used in the present specification have the ordinary meaning as is accorded to such terms and expressions with respect to their corresponding respective areas of inquiry and study, except where specific meanings have otherwise been set forth herein.

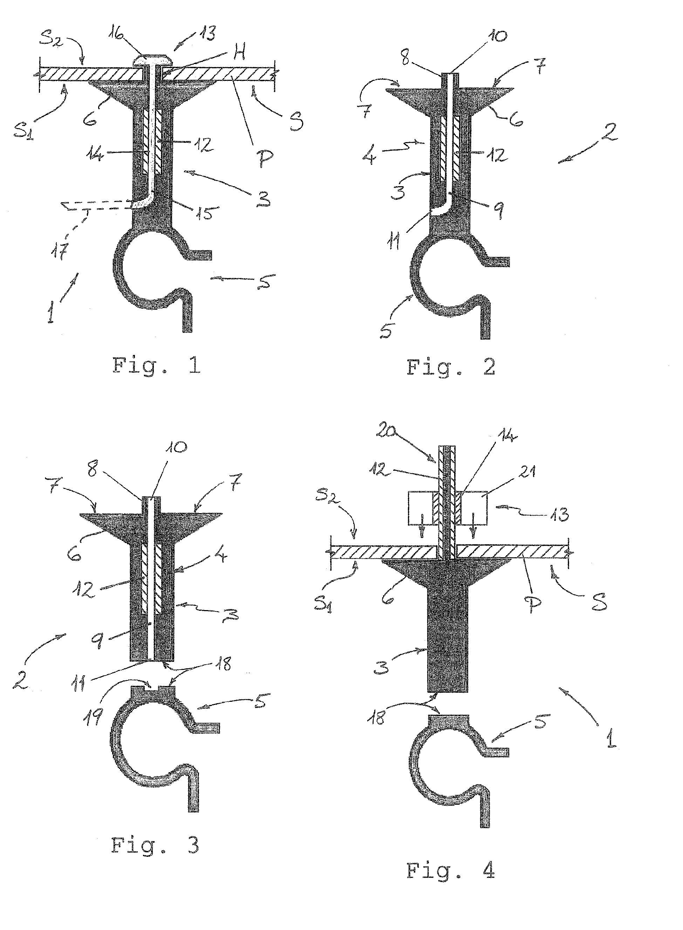

With reference firstly to Fig. 1 of the drawings, a bracket assembly 1 according to a preferred embodiment is illustrated in sectioned side view mounted to a structure S comprising a plate member P. The bracket assembly 1 includes a bracket member 2 which is also specifically shown in isolation (again in sectioned side view) in drawing Fig. 2.

The bracket member 2 has a generally elongate body portion 3 and includes attachment means 4 for facilitating mounting and attachment of the bracket member 2 to the structure S, and in particular to the plate member P. Furthermore, the bracket member 2 has a holding portion 5 provided at an end region of the body portion 3 for receiving and holding an object (not shown) in spaced relation to and supported on the structure. In this particular embodiment, the holding portion 5 has the form of a resilient and generally C-shaped clip, which is designed to receive and support an object, such as a conduit or cabling, e.g. of an electrical system.

An opposite, upper end region of the body portion 3 of the bracket member 2 includes an outwardly extending flange 6 which presents a seating surface 7 configured to seat or bear against a corresponding first side s₁ of the structure S to which the bracket assembly 1 is attached. Further, the body portion 3 includes a nub or stub 8 which projects centrally of the seating surface 7 for alignment with a mounting hole H formed in the plate member P of the structure S to which the bracket assembly 1 is mounted. As is apparent from drawing Fig. 2, an axial bore 9 extends substantially centrally of the body portion 3 of the bracket member 2 from an insertion aperture 10 in the nub/stub 8 towards the clip-like holding portion 5. In the vicinity of holding portion 5, the bore 9 follows a lateral bend and terminates at an exit aperture 11 in a side of the body portion 3. The axial bore 9 includes a first engagement profile 12 formed over a part of an inner surface thereof within the body portion 3 for engaging and interacting with a complementary second engagement profile 14 of a fastening member 13. The first engagement profile 12 can thus be deemed to constitute at least part of the attachment means 4 for facilitating the mounting and attachment of the bracket member 2 to the structure S.

With reference again to Fig. 1 of the drawings, the fastening member 13 of bracket assembly 1 in this embodiment comprises an elongate flexible stem 15 having the complementary second engagement profile 14 formed along at least a part of the length thereof for interacting and cooperating with the first engagement profile 12 in the bore 9 of the bracket member body portion 3 to form a ratchet mechanism which, in turn, facilitates the quick and reliable mounting and securement of the bracket assembly 1. In this regard, the fastening member 13 also includes a head element 16 at a proximal end region of the elongate flexible stem 15 for abutting and/or bearing against an opposite second side s₂ of the plate member P of the structure S when the bracket assembly 1 is installed, as shown in Fig. 1.

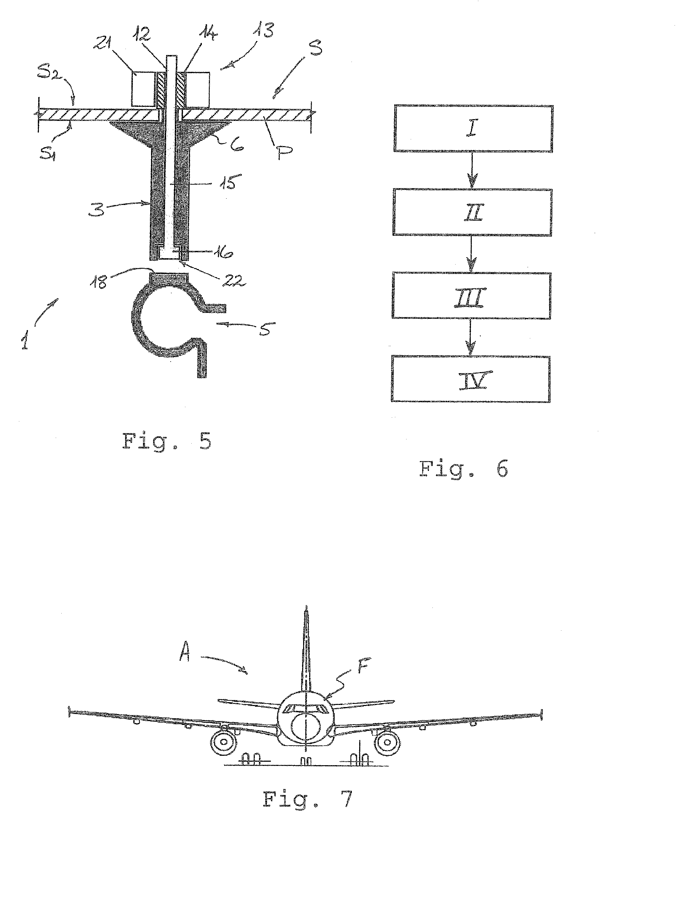

The bracket assembly 1 and bracket member 2 of the present invention are specifically designed for application in the nautical, aeronautical, and automotive industries for use in mounting or supporting objects such as cabling, conduits and/or piping within vehicle structures. Fig. 7, for example, shows an aircraft A having a fuselage structure F in which the bracket assembly 1 of the present invention may typically find application.

Referring now to Fig. 6 of the drawings, a flow diagram is shown that schematically illustrates the steps in a method of forming a bracket assembly 1 according to the embodiment of the invention described above with respect to Figs. 1 and 2. In this regard, the first box I of Fig. 4 represents the step of providing a bracket member 2 having attachment means 4 for mounting and attaching the bracket member 2 to a structure S, the attachment means including a first engagement profile 12 configured to interact with a complementary second engagement profile 14 of a fastening member 13. The second box II then represents the step of positioning the bracket member 2 at or adjacent to a mounting hole H provided in the structure S, in particular such that the bore 9 in the body portion 3 of the bracket member 2 is substantially aligned with the mounting hole H. The third box III represents the step of inserting a fastening member 13 having a complementary second engagement profile 14 in a linear inserting motion through the mounting hole H, into an insertion aperture 10 at an upper end of the body portion 3 of the bracket member 2 and through the bore 9 of the bracket member such that a distal end region 17 of the fastening member 13 emerges from the exit aperture 11 close to the clip-like holding portion 5 of the bracket member. In this regard, it will be appreciated that the respective first and second engagement profiles 12, 14 of the bracket member 2 and the fastening member 13 engage and interact with one another in the bore 9 in the manner of a ratchet mechanism. By pulling or drawing the distal end region 17 of the stem 15 that emerges from the exit aperture 11 with respect to the body portion 3 of the bracket member, such that the head 16 of the fastening member 13 presses against the second side s₂ of the plate member P and the seating surface 7 of the flange 6 presses against the first side s₁ of the plate member P, the fastening member 13 is able to be tensioned (i.e. via the ratchet mechanism) to secure the bracket member 2 against the structure S in the assembly 1 as shown in Fig. 1. The final box IV in Fig. 4 of the drawings represents the step of removing or cutting-off the distal end region 17 of the fastening member 13 protruding from the exit aperture 11 of the bracket member 2 to complete or finish the mounting and securing of the bracket assembly 1.

With reference now to Fig. 3 of the drawings, a modification of the embodiments in Figs. 1 and 2 is illustrated. In this modified embodiment, the bracket member 2 of the assembly 1 is formed in two parts instead of being a unitary or integral component. In particular, the holding portion 5 provided in the form of a resilient C-shaped clip is detachable from the end region of the body portion 3. To this end, releasable securing means 18, e.g. in the form of a snap-fit connector, may be provided on either or both of the opposed faces of the body portion 3 and the holding portion 5. By rendering the clip-like holding portion 5 detachably securable to the body portion 3, a number of advantages can be realised. That is, the mounting of the bracket assembly 1 to the structure S can be effected more reliably and more flexibly. The axial bore 9 through the centre of the body portion 3 of bracket member 2 can extend straight (i.e. without any lateral bend) from the insertion aperture 10 to the exit aperture 11. As a result, the mounting of the body portion 3 to the plate member P is simplified because tensioning force can be applied to stem 15 of the fastening member 13 in a direction perpendicular to the plane of the plate member P with even force distribution over the seating surfaces 7 of flange 6. A distal end region 17 of elongate stem 15 protruding from the exit aperture 11 of the body portion 3 is then removed or cut off, enabling clip-like holding portion 5 to be attached via the securing means 18. A small recess 19 in the face of the holding clip or portion 5 accommodates any stub or "tail" of the elongate stem 15 projecting from the exit aperture 11 after the distal end region 17 is cut off. Due to the detachable nature of holding clip 5 in this embodiment, a different sized holding clip 5 may be secured to the body portion 3 to accommodate different sized objects, providing for more a flexible use or application of the bracket assembly 1.

With reference to Fig. 4 of the drawings, an alternative embodiment to those specifically illustrated in Figs. 1 to 3 of the drawings will now be described. In this regard, it can be seen that the respective male/female mating configuration and relationship between the fastening member 13 and the bracket member 2 of the embodiment shown and described with reference to Figs. 1 to 3 of the drawings may be reversed. For example, instead of providing a (female) bore 9 in the body portion 3 of the bracket member 2 for receiving a (male) fastening member 13 therein, the nub or stub 8 is formed as a substantially longer projection 20. The projection 20 on the body portion 3 of the bracket member 2 is thus inserted into the mounting hole H from the first side s₁ of the structure S and extends substantially above the mounting hole H in the plate member P of the structure S, with the first engagement profile 12 provided on an outer surface of that projection 20. Accordingly, the fastening member 13 of this embodiment is provided in the form of a sleeve or nut 21 having an axial bore in which the complementary second engagement profile 14 is provided. In this embodiment, therefore, the fastening member 13 is configured so that it is to be axially inserted in the direction of the arrows in a linear motion over the projection 20 at the upper end region of the bracket member body portion 3 on the second side s₂ of the structure S. As before, however, the first and second engagement profiles 12, 14 interact to provide a ratchet mechanism for tensioning and securing the bracket assembly 1 in position at the mounting hole H in the structure S for supporting or hanging objects, like cables, conduits and/or piping, with respect to that structure.

Referring now to Fig. 5 of the drawings, a further embodiment of a bracket assembly 1 that incorporates aspects of both the embodiments in Fig. 3 and Fig. 4 is shown schematically. In this particular embodiment, a smooth axial bore 9 through the body portion 3 of the bracket member 2 accommodates fastening member 13 having an elongate stem 15 and a head element 16 which is received in a recess 22 formed at a lower end of the body portion 3. The elongate stem 15 of the fastening member 13 in this embodiment comprises a first engagement profile 12 and is inserted into the mounting hole H from the first side s₁ of the structure S to interact with a sleeve or nut 21 on the second side s₂ of the structure having an axial bore in which a complementary second engagement profile 14 is formed. As in the embodiment of Fig. 3, the holding portion or clip 5 is detachable from the end region of the body portion 3 via a releasable securing means 18, e.g. in the form of a snap-fit connector.

Although specific embodiments of the invention have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

In this document, the terms "comprise", "comprising", "include", "including", "contain", "containing", "have", "having", and any variations thereof, are intended to be understood in an inclusive (i.e. non-exclusive) sense, such that the process, method, device, apparatus or system described herein is not limited to those features or parts or elements or steps recited but may include other elements, features, parts or steps not expressly listed or inherent to such process, method, article, or apparatus. Furthermore, the terms "a" and "an" used herein are intended to be understood as meaning one or more unless explicitly stated otherwise. Moreover, the terms "first", "second", "third", etc. are used merely as labels, and are not intended to impose numerical requirements on or to establish a certain ranking of importance of their objects.

**List of Reference Signs**

| | |
|---|---|
| 1 | bracket assembly |
| 2 | bracket member |
| 3 | body portion |
| 4 | attachment means |
| 5 | holding portion |
| 6 | flange |
| 7 | seating surface |
| 8 | nub or stub |
| 9 | bore |
| 10 | insertion aperture |
| 11 | exit aperture |
| 12 | first engagement profile |
| 13 | fastening member |
| 14 | second engagement profile |
| 15 | elongate stem |
| 16 | head element |
| 17 | distal end region |
| 18 | securing means |
| 19 | recess |
| 20 | projection |
| 21 | sleeve or nut |
| 22 | recess |
| S | structure |
| P | plate member |
| H | mounting hole |
| S₁ | first side of the plate member |
| S₂ | second side of the plate member |
| A | aircraft |
| F | fuselage |

## Claims

1. A bracket assembly (1) comprising:
a bracket member (2) having a body portion (3) with attachment means (4) for attaching the bracket member (2) to a structure (S), and a holding portion (5) for holding an object with respect to the structure (S); and
a fastening member (13) configured to interact with the attachment means (4) for securing the bracket member (2) to the structure (S),
wherein the fastening member (13) and attachment means (4) of the bracket member (2) cooperate to form a detent mechanism or a ratchet mechanism.

2. A bracket assembly (1) according to claim 1, wherein the attachment means (4) of the bracket member (2) includes a first engagement part or profile (12) configured to cooperate with a complementary second engagement part or profile (14) of the fastening member (13) to form the detent mechanism or ratchet mechanism.

3. A bracket assembly (1) according to claim 2, wherein the first engagement part or profile (12) is provided in a bore or cavity (9) of the body portion (3) and the fastening member (13) is configured for linear insertion into the bore or cavity (9).

4. A bracket assembly (1) according to claim 2, wherein the first engagement part or profile (12) is provided on a projection from the body portion (3) and the fastening member (13) is configured for linear insertion onto or over the projection.

5. A bracket assembly (1) according to claim 3 or claim 4, wherein the first engagement part or profile (12) interacts with the second engagement part or profile (14) to allow linear motion of the fastening member (13) in one direction only.

6. A bracket assembly (1) according to any of claims 1 to 3 or 5, wherein the fastening member (13) has an elongate body (15) for insertion into a cavity or bore (9) of the bracket member (2), and a head (16) for abutting and/or bearing against the structure (S) to hold the bracket member (2) secured to the structure (S), wherein the complementary second engagement part or profile (14) is provided on the elongate body (15) of the fastening member (13).

7. A bracket assembly (1) according to claims 6, wherein the body portion (3) includes an insertion aperture (10) for introducing the fastening member (13) into the bracket member (2) and an exit aperture (11) through which an end (17) of the fastening member (13) protrudes after insertion into the bracket member (2).

8. A bracket member (2) comprising:
a body portion (3) including attachment means (4) for attaching the bracket member (2) to a structure (S); and
a holding portion (5) for holding and supporting an object with respect to the structure (S);
wherein the attachment means (4) includes a first engagement part or profile (12) which is configured to engage and cooperate with a complementary engagement part or profile (14) of a fastening member (13) to form a detent mechanism or a ratchet mechanism for securing the bracket member (2) to the structure (S).

9. A bracket member (2) according to claim 8, wherein the first engagement part or profile (12) is provided in a bore or cavity (9) and the bore or cavity (9) is configured to receive the fastening member (13) via linear insertion.

10. A bracket member (2) according to claim 9, including an insertion aperture (10) for introducing the fastening member (13) into the bore or cavity (9) and an exit aperture (11) through which the fastening member (13) protrudes after insertion into the bore or cavity (9).

11. A bracket member (2) according to any of claims 8 to 10, wherein the holding portion (5) is provided at an end region of the body portion (3) and is configured as a hanger, preferably as a resilient clip-type hanger, for holding and supporting an object with respect to the structure (S).

12. A bracket member (2) according to any of claims 8 to 11, wherein the holding portion (5) is detachably securable to the body portion (3).

13. A method of forming a bracket assembly (1), comprising the steps of:
providing a bracket member (2) having attachment means (4) for attaching the bracket member (2) to a structure (S), wherein the attachment means (4) includes a first engagement element or profile (12) configured to interact with a complementary second engagement element or profile (14) of a fastening member (13);
positioning the bracket member (2) at a first side (s₁) of the structure (S) adjacent a mounting opening or hole (H) in the structure (S);
introducing the fastening member (13) having the said complementary second engagement element or profile (14) from a second side (s₂) of the structure (S) in a linear motion into engagement with the first engagement element or profile (12),
whereby the respective first and second engagement profiles (12, 14) interact and operate as a detent mechanism or a ratchet mechanism to secure the bracket member (2) to the structure (S) in a bracket assembly.

14. A method according to claim 13, wherein the step of positioning the bracket member (2) adjacent the mounting opening or hole (H) comprises substantially aligning a bore or cavity (9) in the bracket member (2) with the mounting opening or hole (H) at a first side (s₁) of the structure (S), the bore or cavity (9) including the first engagement element or profile (12), and
wherein the step of introducing the fastening member (13) comprises inserting an elongate body (15) of the fastening member (13) from the second side (s₂) of the structure (S) into the bore or cavity (9) in the bracket member (2).

15. A method according to claim 13, wherein the step of positioning the bracket member (2) adjacent the mounting opening or hole (H) comprises inserting a projection of the bracket member (2) into the mounting opening or hole (H) from the first side (s₁) of the structure (S), the projection having the first engagement element or profile (12), and
wherein the step of introducing the fastening member (13) comprises inserting the fastening member (13) over the projection on the second side (s₂) of the structure (S).

16. A vehicle, such as an aircraft (A), having one or more bracket assembly (1) according to any of claims 1 to 7.
